# EUROPEAN PATENT APPLICATION

(11) **EP 4 707 826 A2**
(43) Date of publication of application: **11.03.2026**
(21) Application number: 25226980.8
(22) Date of filing: 09.08.2021
(51) Int. Cl.: G01R 31/00

(54) **CHARGING PORT PLUG FOR AN ELECTRIC VEHICLE AND METHOD FOR SAFEGUARDING A VEHICLE AGAINST DRIVING AWAY**

(30) Priority: 13.10.2020 NL 2026665
(62) Divisional of application: 21755093.8
(71) Applicant: Ralf Adams B.V., 5071 CS Udenhout (NL); Jan Wijnans B.V., 5071 AL Udenhout (NL)
(72) Inventor: Wijnans, Hendricus Johannes Bernardus, 5071AL Udenhout (NL); Adams, Ralf Arnoldus Antonius, 5071CS Udenhout (NL)
(74) Representative: Leeger, Ferdinand Christiaan

(57) **Abstract**

A charging port plug for an electric vehicle (100) comprising a plug body; and a first plug head for engaging a first type of electric charging port; characterized in that
i) the first plug head comprises electric contact parts and a first electric resistance for enabling an electrical communicative connection between the plug and the vehicle; and/or
ii) the first plug head comprises electric contact parts and a processor for enabling an electrical communicative connection between the plug and the vehicle, and wherein the plug is arranged to send an signal to the vehicle, such as for shifting the vehicle into a parking or neutral mode;
wherein the plug is designed to be incompatible with the electrical charging of the vehicle. A method for safeguarding a vehicle against driving away, wherein the vehicle comprises a charging port of the first type, wherein the vehicle is arranged for safeguarding itself in response to an electrically communicative coupling with the plug, and wherein the method comprises the steps of: providing the charging port plug; having the plug engage the charging port of the first type; and establishing, by means of engagement, an electrically communicative coupling between the plug and the vehicle.

## Description

Electric vehicles are presently designed with safeguards against accidentally driving off on their own, such as by activating a brake when they are charging at a charging station, for example a charging pole. It is known from JPH09219901 A from SUMITOMO ELECTRIC INDUSTRIES by further example that a vehicle can be safeguarded against the unintentional starting of the engine when the car battery and a charging source are connected. To this end, the CPU of an electric vehicle is presently designed to communicate with the charging station by means of the plug and the electric cord. So that the vehicle knows that it is indeed connected to a charging station and will therefore activate its safeguards. The majority of present electric vehicles in Europe use one of the following charging port types:
Type 1 Yazaki, SAE J1772, IEC 62196-1, This charging port is the Japanese standard for AC charging and is also adopted in the US and accepted in the EU. This type connector can be used on car models such as: Opel
   Ampera (previous version), Nissan Leaf, Nissan E-NV200, Mitsubishi Outlander, Mitsubishi iMiev, Peugeot iON, Citröen C-Zero, Renault Kangoo ZE, Ford Focus electric, Toyota Prius Plug in and KIA SOUL; and
Type 2, IEC 62196-2, This charging port has been designated by the European Commission as a standard for regular charging ((≤ 22 kW) of electric cars. This type of connector can be used with car models such as: Opel Ampera (new version) BMW i3, 18, BYD E6, Renault Zoe, Volvo V60 plug-in hybrid, VW Golf plug-in hybrid, VW E-up, Audi A3 E-tron, Mercedes S500 plug-in, Porsche Panamera and Renault Kangoo ZE.

Other types of charging ports are also known, such as the Type 3 Combined Charging System, also called CCS Combo 2, the Type 4 CHAdeMOx and the Type 5 Tesla Supercharger.

Because more and more electric vehicles are on the road, it is increasingly common for such electric vehicles to be involved in an accident. It can in such situations happen that the engine of an electric vehicle is accidentally not switched off by a driver, or that the engine starts of its own accord due to sustained damage during the accident and may even drive off. This can have life-threatening consequences. There is therefore a desire among rescuers to simply protect electric vehicles against the unintentional starting of the engine after an accident.

To this end there is here provided a first aspect according to the invention of a charging port plug for an electric vehicle comprising
- a plug body; and
- a first plug head (3.1) for engaging a first type of electric charging port (P1);
characterized in that
i) the first plug head (3.1) comprises electric contact parts (4.1, 4.2) and a first electric resistance (5.1) for enabling an electrical communicative connection between the plug and the vehicle;
   and/or
ii) the first plug head (3.1) comprises electric contact parts (4.1, 4.2) and a processor (20) for enabling an electrical communicative connection between the plug and the vehicle, and wherein the plug is arranged to send an signal (S) to the vehicle, such as an instruction signal for shifting the vehicle into a parking or neutral mode;
wherein regardless of i) or ii), the plug (1) is designed to be incompatible with the electrical charging of the vehicle.

The first type of charging port can then, for example, be a charging port of type 1, 2, 3, 4 or 5 as mentioned. The first plug head may then be a plug head mated to the respective charging port of the first type. First type does not mean type 1, but a first type such as selected from the list of type 1, 2, 3, 4, or 5. Due to the presence of the electrical resistance and/or processor being able to send an instruction signal, the vehicle can communicate electrically with the plug instead of with the charging station. In fact, the vehicle is tricked into thinking that it is at the charging station by means of the resistance and/or processor. As a result, the vehicle will safeguard itself against driving away without having to be connected to the charging station. It may further be understood that 'incompatible' design means that the plug is unsuitable for mediating electrical energy between an external power source and the vehicle for the electrically charging said vehicle. In a more specific example, the plug according to the invention is designed without a cable and also without any electrical mediation possibilities between an external power source and the vehicle for electrically charging said vehicle. The above-mentioned invention can be inserted into the charging port of a vehicle after an accident, or even during an arrest, so that it automatically safeguards itself against driving away. Rescuers can carry the invention with them and, if desired, use the invention to provide assurance that the vehicle will not move. More particularly, the invention can prevent the vehicle's engine from drawing electrical energy from the battery, which may be damaged in an accident. In this way, the risk of battery ignition can also be reduced. Feature ii) is a particular functionality for cars that either in addition to the resistance verification further or alternatively verify their connection to a charging station by means of instruction signals issued by the charging station. The combination of feature i) and ii) therefor allow for a universally working plug compatible with any method by which electric vehicles could verify their connection to a charging station.

In some instances an electric vehicle may only be receptable for instructions the Protective Earth (PE) port and the Proximity Pilot (PP) are electrically connected. In such a vehicle merely connecting the PE and PP lines, regardless of a first resistance, is insufficient for the vehicle to enact its safeguards. Accordingly, the electric contact parts of the first plug head may comprise two first contact parts for electrically connecting a PE port of the first type of charging port to the PP port of the first type of charging port and a second contact part for establishing a communicative connection over the Control Pilot (CP) port of the first type of charging port, such as with the processor. The presence of the first resistance is here optional, but beneficial for universality. This allows the system to universally simulate connection to a charging station with only three connection parts instead of five connection parts or seven connection parts as is usual in ordinary plug types.

Optionally, the plug comprises a second plug head for engaging a second type of electric charging port. The second plug head comprises further electrical contact parts for enabling an electrical communicative connection between the plug and vehicle and optionally a second resistance. Such a second type of electric charging port is, for example, mutually different from the first type of charging port in that it is a different charging port from the list of type 1, type 2, type 3, type 4 and type 5, than the first type of charging port. An advantage is that the plug serves as a universal plug in view of the many different possible charging ports. The first type of charging port and the second type of charging port are different from each other and generally never both present on the same vehicle. The second plug head may be a plug head that mates with the respective charging port if the first plug head doesn't match.

For plugs with two plug heads the further electric contact parts of the second plug head may comprise two third contact parts for electrically connecting a PE port of the second type of charging port to the PP port of the second type of charging port, such as via the first or second resistance, and a fourth contact part for establishing a communicative connection over the CP port of the second type of charging port optionally via the processor.

Optionally and/or alternatively, the first plug head is located at a first distal end of the plug body, and the second plug head is located at a second distal end of the plug body. Optionally, the plug body further comprises a handle extending between the plug heads for manipulating the plug between the plug heads. The combination of the two before mentioned optional features for ease of manipulation. In order to prevent the plug from projecting too far from the vehicle the plug handle may be bent or kinked. In one embodiment the plug may be designed such that the first plug head is angled downwardly with respect to the second plug head when, in use, the second plug head is plugged into a vehicle, such that the second plug head is angled downwardly with respect to the first plug head when, in use, the first plug head is plugged into a vehicle. In order to improve user friendliness the plug body could be a striking color such as orange, red or yellow, so that one can see from a distance that the plug is plugged into the vehicle. Optionally, the color of the plug body is fluorescent to make the whole extra visible. Optionally, the plug body can be made phosphorescent, with a reflector and/or with a light source, in order to be visible to rescuers in the dark.

The type 1, 2, 3, 4 and 5 charging ports are generally each protected against the accidental removal of a charging plug. To this end, click mechanisms have been incorporated that engage on a side of a charging plug. This click mechanism is designed to automatically establish a lateral connection with the charging plug. This locking is presently only reversible when a driver electrically unlocks the click mechanism via the vehicle's computer system. In the event of a malfunction or damage to the vehicle, this lateral locking may become irreversible by means of the click mechanism. Optionally, it is possible that the first plug head and the second plug head each comprise an upright wall extending outwardly from a base of the respective plug head at least partly around the respective contact parts, and wherein each of the upright walls comprises at least a part which prevents a lateral connection with the respective charging port type. This at least one part can then for instance be a recess which extends to a distal edge of the upright wall. In this way a click mechanism cannot engage the respective plug head and will protrude through the recess and not find a grip all the way to the edge when the plug is removed. Optionally, the length is approximately half the height of the upright wall.

The plug may further comprise an indicator, such as an LED, that is arranged for giving off a signal, such as a light signal, when the charging port plug is electrically communicatively coupled with the vehicle. By grace of this feature an aid worker is able to perceive whether the plug is properly plugged in and is indeed communicating with the vehicle such that it is safeguarded from driving off. It should be clear that the indicator can be communicatively connected to the first plug head, as well as the second plug head if there are indeed two plug heads. By extension, the plug may optionally comprise a battery and a test switch, such as a springback button, for opening and closing a test circuit with the battery and the indicator, to test the whether indicator works by means of said test switch.

It is possible that charging port plug comprises the processor, wherein the processor is arranged for, in use, receiving, or requesting and receiving, information on the battery temperature of the vehicle via the communicative connection. The plug may then further comprise a display arranged for displaying the information on battery temperature. Alternatively or additionally, the plug may comprise a wireless communication-device, such as a WiFi or a Bluetooth transmitter-receiver to establish a communicative connection with an external device, such as a smartphone, smart screen, tablet, or laptop, so that the information on battery temperature of the vehicle is displayed on a human interface associated with said external device.

Optionally, the plug is arranged for giving off an alarm signal when, in use, the temperature of the battery of the vehicle exceeds a threshold value, wherein the threshold value is a temperature between 50-100 degrees Celsius. The indicator may, for example, be arranged to blink, and/or the display, if present, may be arranged to display a warning sign. It may separately or additionally also be possible for the smartphone to be arranged to vibrate or make a sound in response to the alarm signal. This makes it possible to detect a short circuit during emergency assistance.

It may also be useful for emergency services to make use of in-vehicle sensors for providing early detection of thermal runaway. Presently, electric vehicles are provided with a battery management system (BMS) which comprises a temperature sensor for measuring battery temperature, a gas sensor such a hydrogen gas detector, for detecting a physical leak in the battery, and an electrical leak sensor, such as a voltage detector, for detecting electrical leakage. The CPU manages the sensor information for regulating the manner and speed with which the battery of the vehicle charged. In order to make use early detection of thermal runaway the charging port plug may comprises the processor according to feature ii) of the first aspect of the invention. The processor is arranged for, in use, receiving, or requesting and receiving, information via the communicative connection on any one of:
- a battery temperature;
- a detection of gasses;
- a detection of electrical leakage;
wherein processor is arranged for detecting a thermal runaway based on the information, and wherein the plug further comprises:
- an on board audio and/or visual alarm which activates to produce an audio and/or visual alarm signal in response to a detected thermal runaway; and/or
- a wireless communication-device (22), such as WiFi or Bluetooth transmitter-receiver to establish a communicative connection with an external device, such as a smartphone, smart screen, tablet, or laptop, for communicating an alarm signal in response to the detected thermal runaway to the external device.

It shall be understood that the on board visual alarm may be emitted from a display on the plug, or by the LED, such as by blinking or strobing. For the emission of an audio alarm a speaker may be provided within the system. For strobing a condenser may be provided to the plug. Thermal runaway may be detected on the basis of the temperature exceeding a threshold, on the basis of the detection of hydrogen gas, and/or on the basis of the detection of a leak current exceeding a threshold.

In an alternative embodiment the car itself may be arranged to detect thermal runaway. In such an event the plug may be arranged to receive or request and receive information from the vehicle about the detection of thermal runaway. The plug may then comprise:
- an on board audio and/or visual alarm which activates to produce an audio and/or visual alarm signal in response to a detected thermal runaway; and/or
- a wireless communication-device (22), such as a WiFi or Bluetooth transmitter-receiver to establish a communicative connection with an external device, such as a smartphone, smart screen, tablet, or laptop, for communicating an alarm signal in response to the detected thermal runaway to the external device.

The invention is further described herein with reference to specific examples according to the figures:
- - Fig. 1: shows prior art type 1 and type 2 charging cables and charging ports;
- - Fig. 2: shows a schematic drawing of the device according to the invention;
- - Fig. 3: shows the first plug head of the plug according to the invention;
- - Fig. 4: shows the second plug head of the plug according to the invention;
- - Fig. 5: shows a schematic assembly of plug and vehicle;
- - Fig. 6: shows a perspective view of the body of the plug according to the invention;
- - Fig. 7: shows a perspective view of the plug according to the invention;
- - Fig. 8: shows a schematic drawing of a further embodiment of the plug according to the invention; and
- - Fig. 9: shows a schematic drawing of a still further embodiment of the plug according to the invention.

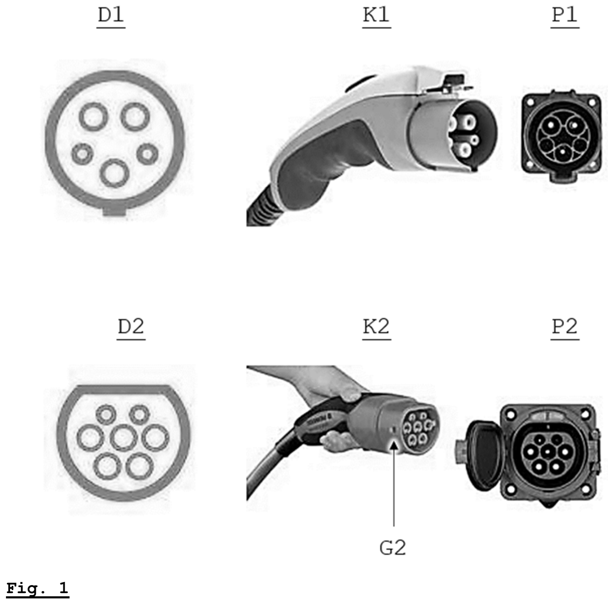

Figure 1 shows the well-known type 1 IEC 62196-1 charging cable K1 and charging port P1. A cross-sectional profile D1 of the charging port L1 is also shown. Figure 1 further shows a type 2 IEC 62196-2, charging cable K2 and charging port P2 according to the prior art. The charging ports may be arranged to lock onto the side of the plug, particularly on engagement members, such as the engagement holes G2. Pretensioned projections, this is an example of a click system, can then be incorporated in the port which can extend through the engagement hole G2 when the plug of the cable is inserted into the port.

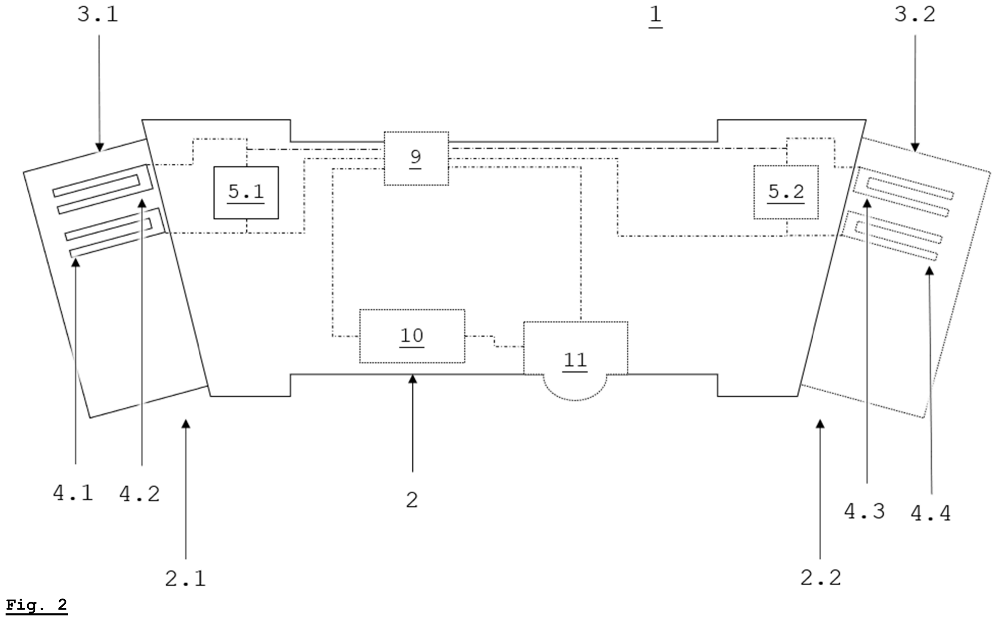

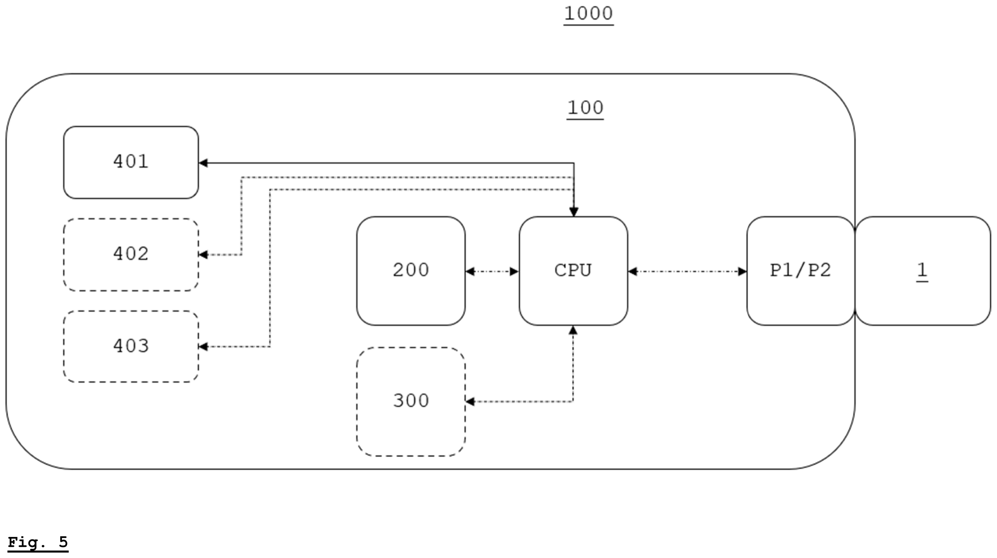

Figure 2 shows a schematic drawing of the charging port plug 1 for an electric vehicle 100. In Figure 5 the vehicle is also schematically shown in assembly with the plug. Returning to Figure 2, it can be seen that the plug has a plug body 2 and a first plug head 3.1 for engaging a first type of electric charging port P1. This plug head has electrical contact parts 4.1, 4.2 which are connected to a first resistor 5.1 for providing an electrical communicative coupling with the vehicle 100. In this example, the first plug head 3.1 can at least be connected to the PP and the PE pins (not shown, but usual) of the first type of charging port P1 respectively by means of the contact parts 4.1, 4.2. The first resistor 5.1 is an electrical resistance of 480 Ohms. The PP connection is a pre-insertion signal connection, and the PE connection is a 'Protective Earth' connection, i.e. the earth connection. This embodiment makes it possible for the vehicle to communicate electronically with the plug by means of the central processing unit CPU, without the plug being made compatible with the electrical charging of the vehicle. The CPU then communicates an off signal to the motor 200 and optionally the CPU activates a braking system 300 (seen in Figure 5) of the output 100 (also seen in Figure 5).

Figure 2 further shows that the plug has a second plug head 3.2 for engaging a second type of electrical charging port P2. The plug then offers the alternative of a second plug head for vehicles equipped with the second type of electric charging port P2 instead of the first type P1. The second plug head comprises further electrical contact parts 4.3, 4.4. These further contact parts are arranged to at least be connected to the PP and PE terminals of the second charging port P2 respectively. The second resistor 5.2 is a 680 Ohm resistor. The PP and PE connections are designed as conductive metal pins for both type 1 and type 2 charging ports. This version makes the plug universal to enable a communicative connection. The first plug head 3.1 and the second plug head 3.2 are located in this example at opposite ends of the charging port plug 1, in particular at opposite ends 2.1, 2.2 of the body 2 of the charging port plug.

It can further be seen that the charging port plug 1 has an indicator 9, in this example an LED which is arranged to emit a light signal only when the charging port plug is electrically coupled to the vehicle via the first head 3.1 or the second head 3.2. The plug further has a battery 10, such as a replaceable A, AA, AAA, B, C, D or rechargeable Li-ion battery, and a test switch 11, in this example a springback button, for opening and closing a circuit with the battery 10 and the indicator, to test the whether the indicator 9 is not defective by means of the test switch. In this example, the indicator and the test switch are each incorporated in the plug body 2. This plug body is also designed as a handle.

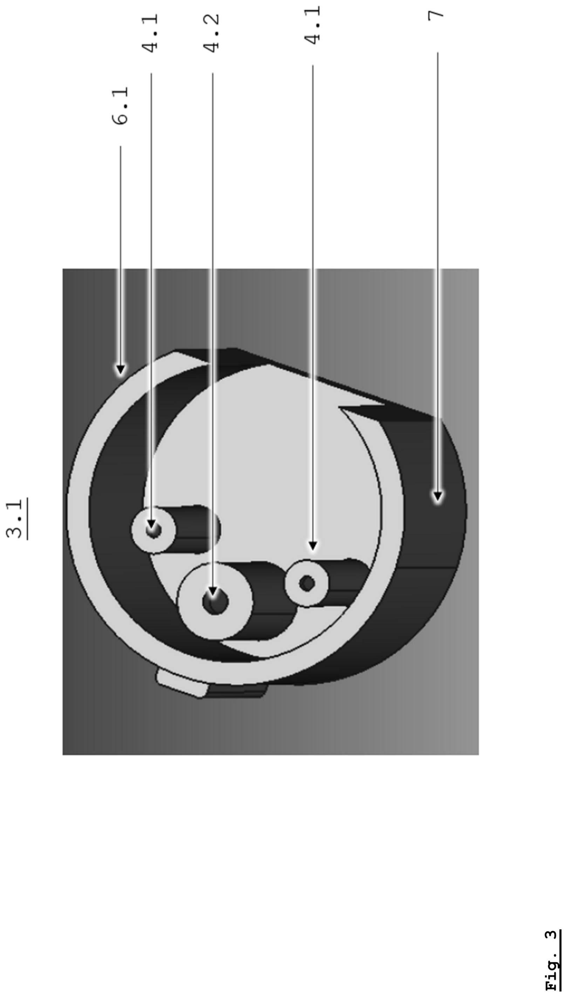

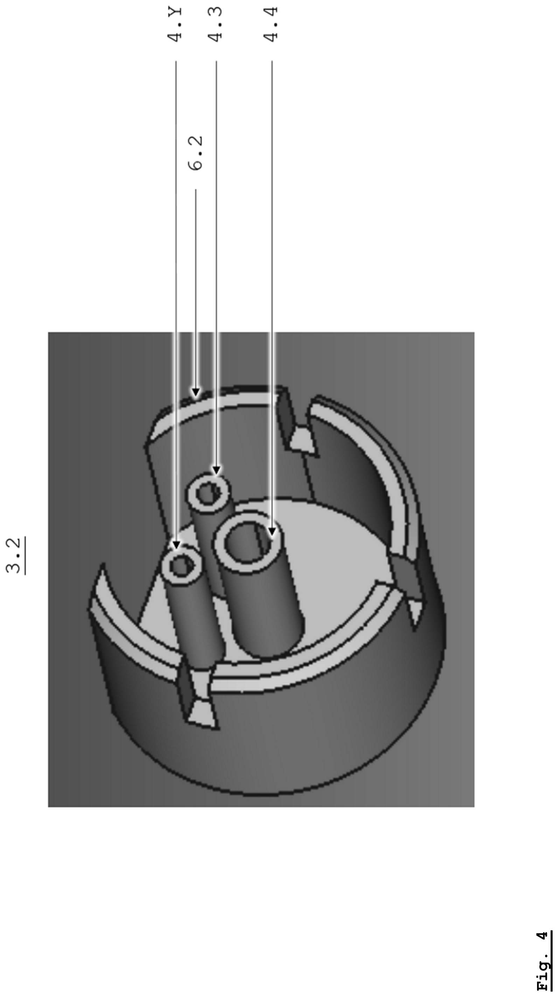

Figure 3 shows that the first plug head 3.1 has an upstanding wall 6.1 which extends outwardly from a base and which partly extends around the contact parts 4.1, 4.2. In the parts where the type 1 charging port P1 would normally engage a type 1 plug of the charging cable K1, the upright wall is sealed. This is the part where the upright wall prevents lateral locking with charging port type 1. The plug head comprises a head body which may be injection molded from a polymeric material. The first plug head 3.1 and the plug body 2 can be glued by means of the base to the first end 2.1 of the plug body. The plug body 2 can itself also be injection molded from the same polymeric material. It is pointed out that Figure 3 shows that contact parts 4.1 and 4.2 are designed so that there are two first contact parts 4.1 for engaging the PE and PP ports, and a second contact for engaging the Control Pilot (CP) port of the first type of charging port. These contact parts aren't necessarily arranged in the manner as shown in Figure 3, however there are a total of three contact parts. In such a setup the CP communication may be used to light up the LED, this may even be mediated by a processor (not shown, but customary). It is also possible for there to be only a single first contact part 4.1 and a single second contact part 4.2. In this later case only PP and PP contact is sought. The LED light may still be triggered but only indicates that the electric connection is established, whereas the former design indicates that the car has actively reached out to the plug by means of signaling. This may be useful to know as it tells a user something about whether the vehicle is still able to receive instructions via the CP port. The same can be said for second plug head 3.2 according to Figure 4.

Here the further electric contact parts 4.3, 4.4 of the second plug head comprise two third contact parts 4.3 for electrically connecting a PE port of the second type of charging port to the PP port of the second type of charging port via the first or second resistance 5.2. This may alternatively also be via the first resistance. Additionally there is a single fourth contact part 4.4 for establishing a communicative connection over the CP port of the second type of charging port. Figure 4 further shows that the second plug head 3.2 also has an upstanding wall 6.2 extending outwardly from a base and extending partly around the further contact parts 4.3, 4.4. In the example of Figure 4, the upright wall has a plurality of recesses extending to a distal edge of the upright wall. These recesses are parts that prevent a lateral locking with charging port type 2.

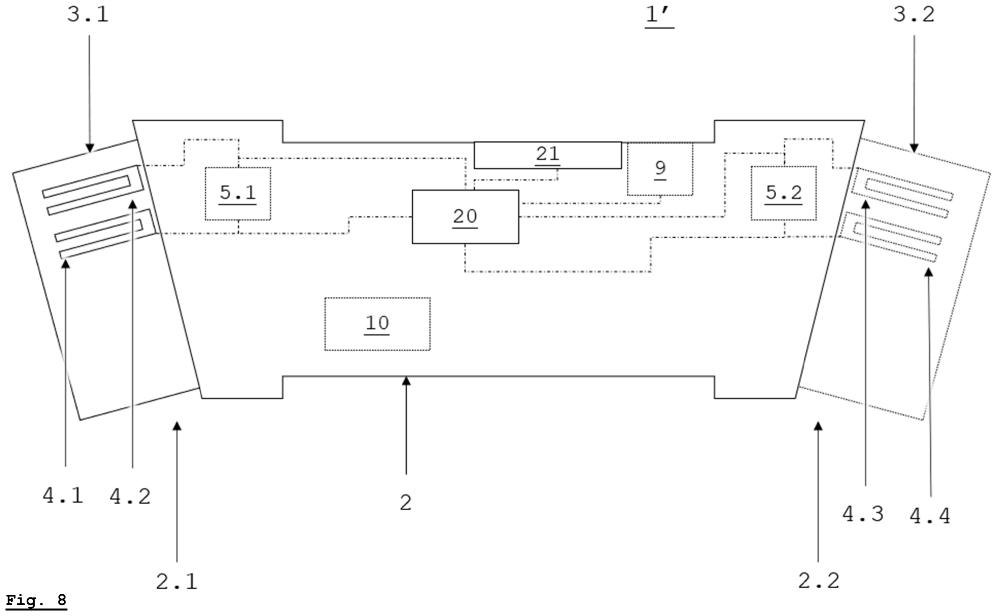

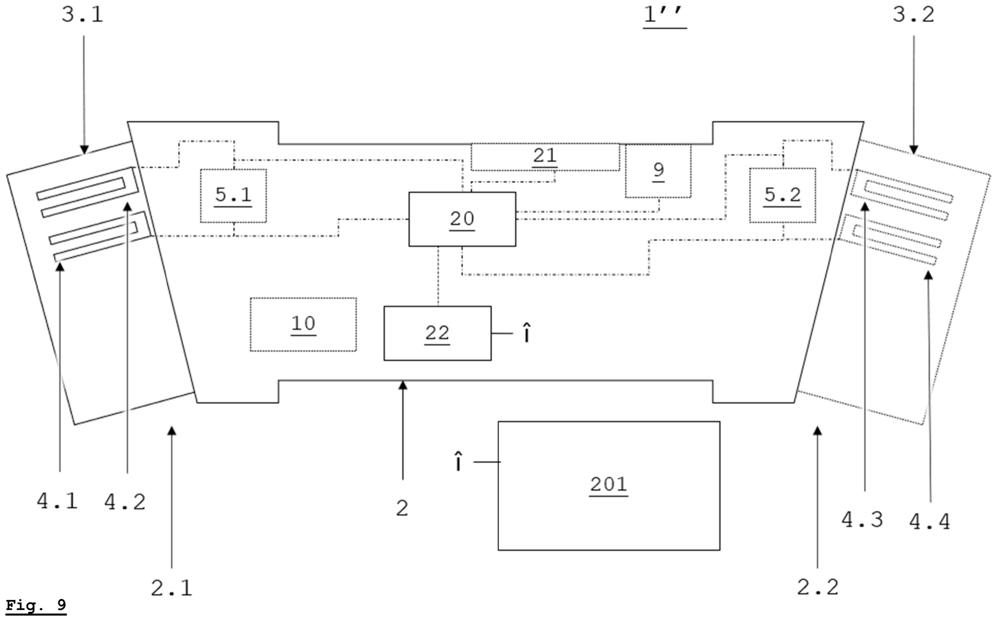

Figure 5 shows an assembly 1000 of the vehicle 100 and the plug 1. In all Figures, optional elements are indicated by broken dashed lines ----. Here it can be seen that, in use, the vehicle will electrically communicate with the plug. The vehicle may be provided with a battery management system consisting of at least a temperature sensor 401 and a program on the CPU itself for regulating the speed with which the battery of the vehicle is charged. Other sensor may also be present, such a hydrogen gas sensor 402 and a electrical leak sensor 403. This information may be useful to aid workers. Such information may be made available over de CP port when the plug is used. How such information may be made available to aid workers is discussed for alternative plug embodiments 1'and 1'' according to Figures 8 and 9 respectively.

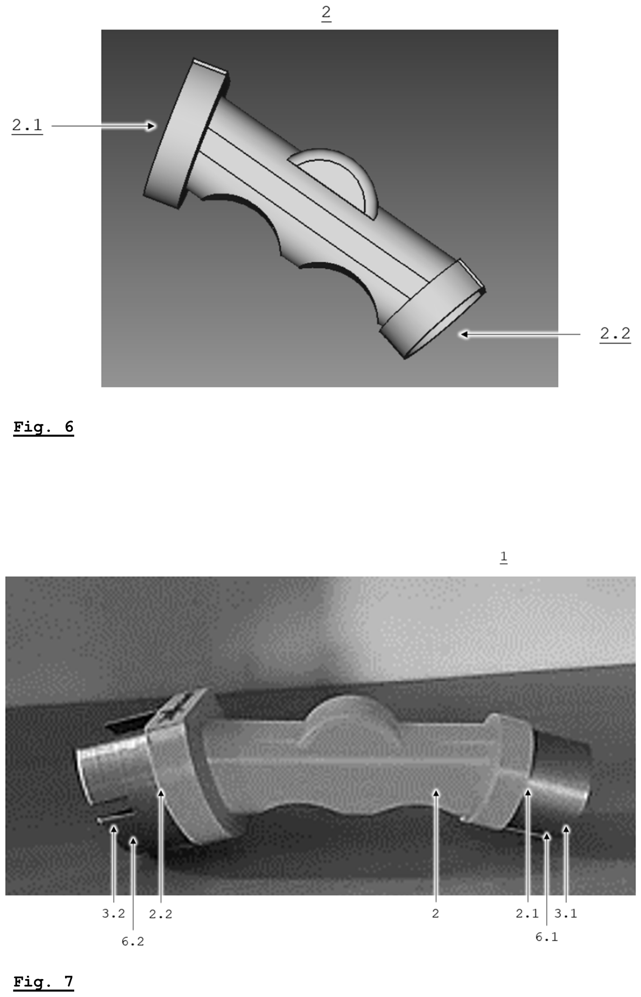

Figure 6 shows the outside of the body. The body is designed as a handle with optional elements such as the indicator 9 and the switch 11 not shown, but they may be present.

Figure 7 shows a perspective view of the plug 1 according to the invention with a first and a second plug head without the further optional element of the indicator 9 and the switch 11. The plug according to Figure 7 does have a first and second resistance according to Figure 2.

Figure 8 shows a charge port plug 1' which is a further embodiment of the charge port plug 1 according to Figure 2. Hereinafter, only differences will be discussed with respect to Figure 2. Same reference numbers will be used for same features. In this example, the plug has a processing unit 20. This processing unit 20 is designed, read pre-programmed, to request information about a battery temperature of the vehicle 100 by means of the communicative connection. That means. The processing unit communicates through the first or optional second plug head 3.1, 3.2 with the CPU of the vehicle which collects temperature information about the battery of the vehicle through a temperature sensor (not shown, but conventional). The battery heating up while stationary or the detection of a temperature above a limit, such as 80 degrees Celsius, is indicative of the vehicle's battery undergoing a possible thermal runaway, or that there is a short circuit somewhere. Based on this information, a rescuer can determine if the vehicle is safe to touch, or if the vehicle is an ignition hazard. In this example, the plug also has a display 21 for displaying to a user the information requested by the processing unit about the battery temperature. In this example, the display is incorporated in the handle, but this can also be done elsewhere. In this example, the processing unit and the display may be arranged to receive electrical energy from the vehicle by means of the electrical communicative connection. Alternatively, the battery 10 may be provided to provide electrical power to the processing unit and display for its operation. Although not shown in Figure 7, it is furthermore possible that the switch 11 and the indicator 9 are both also present here. The plug according to Figure 8 does not require the presence of a first or second resistance and may instead entirely rely on signaling over the CP port for instructing an engine or break system to activate. The processing unit may even send instructions to the CPU for switching the vehicle into a neutral mode or a parking mode. Furthermore, the plug according to Figure 8 may be able to use information from sensors 402 and 403 in addition to information of temperature sensor 401 to determine whether the vehicle is experiencing thermal runaway, or is at high risk thereof. This may be outputted in the form of an indicator 9 warning signal, such as strobing or blinking of an LED, and/or by displaying a warning sign on the display 21. The plug may be arranged to communicate with the CPU in order to request information on the detection of thermal runaway, such as in the event the CPU of the vehicle monitors such things. The same manner of warning is here also possible.

Figure 9 shows a charge port plug 1'' which is a further embodiment of the charge port plug 1' of Figure 8. Hereinafter only differences will be discussed. Same reference numbers will be used for same features. In this example, the display 21 is also optional, and a wireless communication device is provided. In this example a Bluetooth transceiver, but this could also be a WiFi transceiver or an RFID transceiver, is used to establish a wireless communicative connection î with a smartphone 201 so that the vehicle battery temperature information, or a thermal runaway warning, is shown on a display (not shown, but customary) of the smartphone. This can alternatively also be a smart screen, tablet or laptop. The plug is designed to forward information made available by a battery monitoring system, sensors 401, 402, 403 to the smartphone, if these are indeed receivable from the vehicle.

All additional features shown in plugs 1' and 1'' according to Figures 8 and 9 respectively are combinable with the features of the plug 1 according to Figure 2.

## Claims

1. A charging port plug (1) for an electric vehicle (100) comprising
- a plug body (2); and
- a first plug head (3.1) for engaging a first type of electric charging port (P1);
**characterized in that**
i) the first plug head (3.1) comprises electric contact parts (4.1, 4.2) and a first electric resistance (5.1) for enabling an electrical communicative connection between the plug and the vehicle;
and/or
ii) the first plug head (3.1) comprises electric contact parts (4.1, 4.2) and a processor (20) for enabling an electrical communicative connection between the plug and the vehicle, and wherein the plug is arranged to send an signal (S) to the vehicle, such as for shifting the vehicle into a parking or neutral mode;
wherein the plug (1) is designed to be incompatible with the electrical charging of the vehicle.

2. The charging port plug (1) according to claim 1, wherein the first plug head (3.1) comprises electric contact parts (4.1, 4.2) and a processor (20) for enabling an electrical communicative connection between the plug and the vehicle, wherein the plug (1) is designed to be incompatible with the electrical charging of the vehicle, and wherein the plug is arranged to send an instruction signal (S) to the vehicle for shifting the vehicle into a parking or neutral mode
wherein the plug is provided with a wireless communication device (22) for coupling with an external device, wherein the plug is arranged for receiving, and relaying instructions to the vehicle, for shifting the vehicle into the parking mode or neutral mode,
and/or
wherein the plug is provided with a button for sending the signal (S) on user command.

3. The charging port plug (1) according to claim 1 or 2, **characterized in that** the plug comprises a second plug head (3.2) for engaging a second type of electric charging port (P2), wherein the second plug head comprises further electrical contact parts (4.4, 4.5) for enabling an electrical communicative connection between the plug and vehicle and optionally a second resistance (5.2).

4. The charging port plug (1) according to claim 3, **characterized in that** the charging port of the first type is selected from a list of IEC 62196-1, and IEC 62196-2, and wherein the charging port of the second type is selected from a list of IEC 62196-1, and IEC 62196-2, and wherein the first type of charging port and second type of charging port are mutually different, and wherein the first plug head is form fittingly designed for the first type of charging port, and wherein the second type of plug head is form fittingly designed for the second type of charging port.

5. The charging port plug (1) according to claim 3 or 4, **characterized in that** the first plug head (3.1) is situated at a first distal end (2.1) of the plug body, and wherein the second plug head (3.2) is situated at a second distal end (2.2) of the plug body.

6. The charging port plug (1) according to any one of claims 3-5, **characterized in that** the first plug head and the second plug head each comprise un upstanding wall (6.1, 6.2) which extends outwardly from a base of the respective plug head and at least partially around the respective contact parts, and wherein each of the upstanding walls (6.1, 6.2) comprises at least a portion (7) for preventing laterally locking engagement with the respective charging port type.

7. The charging port plug (1) according to claim 6, **characterized in that** the at least one portion (7) is a recess which extends up to a distal edge of the respective upstanding wall (6.1, 6.2), and wherein optionally the recess has a length of approximately half of the height of the respective upstanding wall.

8. The charging port plug (1) according to any one of claims 1-7, further comprising an indicator, such as an LED, that is arranged for giving off a signal, such as a light signal, when the charging port plug is electrically communicatively coupled with the vehicle.

9. The charging port plug (1) according to claim 8, comprising a battery and a test switch, such as a springback button, for the opening and closing of a circuit with the battery and the indicator, to test the operation of the indicator by means of said test switch.

10. The charging port plug (1) according to any one of claims 1-9, wherein the electric contact parts (4.1, 4.2) of the first plug head comprise two first contact parts (4.1) for electrically connecting a Protective Earth (PE) port of the first type of charging port to the Proximity Pilot (PP) port of the first type of charging port, such as via the first resistance (5.1), and a second contact part (4.2) for establishing a communicative connection over the Control Pilot (CP) port of the first type of charging port, optionally via the processor (20).

11. The charging port plug (1) according to at least claim 3, wherein the further electric contact parts (4.1, 4.2) of the second plug head comprise two third contact parts (4.3) for electrically connecting a Protective Earth (PE) port of the second type of charging port to the Proximity Pilot (PP) port of the second type of charging port, such as via the first or second resistance (5.1, 5.2), and a fourth contact part (4.4) for establishing a communicative connection over the Control Pilot (CP) port of the second type of charging port optionally via the processor (20).

12. The charging port plug (1) according to at least one of claims 1-11, **characterized in that** the plug comprises the processor (20), wherein the processor is arranged for, in use, receiving, or requesting and receiving, information on the battery temperature of the vehicle (100) via the communicative connection, and wherein the plug further comprises:
- a display (21) arranged for displaying the information on battery temperature;
and/or
- a wireless communication-device (22), such as a WiFi or a Bluetooth transmitter-receiver to establish a communicative connection with an external device, such as a smartphone, smart screen, tablet, or laptop, so that the information on battery temperature of the vehicle is displayed on a human interface associated with said external device.

13. The charging port plug (1) according to at least one of claims 1-12, **characterized in that** the plug comprises the processor (20), wherein the processor is arranged for, in use, receiving, or requesting and receiving, information via the communicative connection on a detected thermal runaway of a battery pack of the vehicle
wherein the plug further comprises:
- an on board audio and/or visual alarm which activates to produce an audio and/or visual alarm signal in response to a detected thermal runaway;
and/or
- a wireless communication-device (22), such as a WiFi or Bluetooth transmitter-receiver to establish a communicative connection with an external device, such as a smartphone, smart screen, tablet, or laptop, for communicating an alarm signal in response to the detected thermal runaway to the external device.

14. The charging port plug (1) according to at least one of claims 1-13, **characterized in that** the plug comprises the processor (20), wherein the processor is arranged for, in use, receiving, or requesting and receiving, information via the communicative connection on any one of:
- a battery temperature;
- a detection of gasses;
- a detection of electrical leakage;
wherein processor is arranged for detecting a thermal runaway based on the information, and
wherein the plug further comprises:
- an on board audio and/or visual alarm which activates to produce an audio and/or visual alarm signal in response to a detected thermal runaway;
and/or
- a wireless communication-device (22), such as WiFi or Bluetooth transmitter-receiver to establish a communicative connection with an external device, such as a smartphone, smart screen, tablet, or laptop, for communicating an alarm signal in response to the detected thermal runaway to the external device.

15. A method for safeguarding a vehicle against driving away, wherein the vehicle comprises a charging port of the first type, wherein the vehicle is arranged for safeguarding itself in response to an electrically communicative coupling with the plug, and wherein the method comprises the steps of:
- providing a charging port plug according to any one of claims 1-14;
- having the plug engage the charging port of the first type; and
- establishing, by means of engagement, an electrically communicative coupling between the plug and the vehicle.
